# EUROPÄISCHE PATENTSCHRIFT

(11) **EP 1 122 062 B1**
(45) Veröffentlichungstag und Bekanntmachung des Hinweises auf die Patenterteilung: **13.07.2005**
(21) Anmeldenummer: 01101877.7
(22) Anmeldetag: 27.01.2001
(51) Int. Cl.: B32B 31/08, B32B 31/28, B32B 27/10, B32B 27/16

(54) **Verfahren zur Herstellung eines farbigen Mehrschichtverbundes und danach hergestellter Mehrschichtverbund**
Process for production of a coloured multilayered composite and multilayered composite produced with this process
Procédé pour la production d'un composite multicouche coloré et composite multicouche produit selon ce procédé

(30) Priorität: 02.02.2000 DE 10004440
(43) Veröffentlichungstag der Anmeldung: 08.08.2001
(73) Patentinhaber: Trespa International B.V., 6002 SM Weert (NL)
(72) Erfinder: Vogels, Laurens, Petrus, 6001 HD Weert (NL); Van De Wall, Wilhelmus, Josephus, Alex, 5663 SM Geldrop (NL)
(74) Vertreter: Dohmen, Johannes Maria Gerardus

(56) Entgegenhaltungen:
- WO-A-99/12736
- DE-A- 4 215 070
- DE-A- 4 409 478
- DE-A- 19 751 479
- DE-A- 19 757 082
- DE-C- 3 112 437
- US-A- 4 092 198

## Beschreibung

Die vorliegende Erfindung betrifft ein Verfahren zur Herstellung eines farbigen Mehrschichtverbundes, bei dem zwei oder mehrere strahlungshärtbare Schichten, von denen eine Schicht eine Klardeckschicht ist und die übrigen Schichten mit Farbpigmenten ausgerüstet sind, miteinander laminiert und ausgehärtet werden sowie einen derartigen Mehrschichtverbund, hergestellt nach dem Verfahren.

Aus der WO 94/09983 ist es bereits bekannt, die farbige Gestaltung von Fahrzeugteilen mit wenigstens zwei unterschiedlichen Farbtönen durch die Übertragung von auf Gießfolien aufgebrachten acrylischen Farbschichten auf die Fahrzeugteile zu ermöglichen. Ein derartiges Laminat besteht aus einer ersten Polyestertragerschicht, einer Klarschicht aus einem optischen klaren Polymer, das Fluorkohlenwasserstoffharz und Acrylharz enthält, die auf der Oberfläche der Trägerschicht aufgetragen sind, des weiteren einer Bindeschicht und einer Farbschicht aus chloriniertem Polymer mit dispergierten Farbpigmenten. Eine zweite Polyesterträgerschicht mit einer Klebemittelschicht ist auf die Farbschicht auflaminiert. Dieses Laminat in Gestalt eines Mehrschichtverbundes wird auf Fahrzeugteile mittels druckempfindlicher Haftklebetechniken aufgebracht, und danach wird die an die Klarschicht angrenzende erste Trägerschicht entfernt, so daß die Klarschicht eine wetterfeste äußere Deckschicht des Laminats bildet Die PVC enthaltende Farbschicht ist bei Raumtemperatur elastisch und läßt eine Dimensionsänderung des Laminats zu, so daß dieses auf die dreidimensional geformten Fahrzeugteile auflaminiert werden kann. Zur dauerbeständigen haftfesten Verankerung der Farbschichten sind bei diesem Laminat Zwischenschichten aus speziellen Klebstoffen erforderlich, die bestimmte Voraussetzungen erfüllen müssen.

Aus der EP 03 5504 B 1 ist ein Verfahren zur Bildubertragung auf beschichtete Oberflächen, insbesondere von Holzwerkstoffen bekannt, bei dem die Oberfläche mit einer mittels Bestrahlung mit Elektronen auszuhärtenden Polymerschicht aus niedermolekularen Polymeren beschichtet wird. Die Polymerschicht wird in Kontakt, unter Wärmeeinwirkung, mit einem Farbpigment tragenden Transfermedium gebracht. Die Farbpigmente sind in die Polymerschicht eindiffundiert. Durch die Bestrahlung mit Elektronen wird die Polymerschicht ausgehärtet, wobei die Vernetzung mit einer Strahlendosis von 40-80 kGray vorgenommen wird.

US 4,092,198 bezieht sich auf einen Hochdruck-Dekorationschichtstoff mit übereinstimmen dem Farb- und Prägemuster aus einer Anzahl von zusammenlaminierten, harzgetränkten Papierschichten mit Tragschichten, einer über den Tragschichten angeordneten, eine erste Farbe aufweisenden Farbträgerschicht und einer über dieser angeordneten, im wesentlichen transparanten Decklage, wobei zwischen der Farbträgerschicht und der Decklage eine diskontinuierliche Schicht aus einem Harz und einem eine zweite Farbe aufweisenden Pigment angeordnet ist, und der Schichtstoff an seiner Oberseite Erhebungen und Vertiefungen aufweist.

Die DE 4 409 478 A1 zeigt ein Verfahren zur Herstellung einer dekorativen Mehrschichtlackierung durch Auftrag einer farb- und/oder effektgebenden Basislackschicht auf ein Substrat und Überlackieren mit zwei Klarlackschichten, wobei eine erste Klarlackschicht auf die Basislackschicht aufgetragen und durch Erwärmen unter Vermeidung der vollständigen Aushärtung teilweise gehärtet wird, auf die unvollständig ausgehärtete erste Klarlackschicht eine zweite Klarlackschicht aufgetragen und durch Erwärmen gemeinsam mit der ersten Klarlackschicht vollständig ausgehärtet wird. Man erhält Mehrschichtlackierungen von hervorragender Optik mit guter Haftung der Lackschichten untereinander.

Aufgabe der Erfindung ist es ein Verfahren zur Herstellung eines zumindest zweifarbigen Mehrschichtverbundes anzugeben, das unter wirtschaftlichen Bedingungen großtechnisch durchführbar ist und bei dem desweiteren der Mehrschichtverbund ohne Klebemittelschichten gefertigt wird und gegen Witterungseinflüsse dauerbeständige Dekoreigenschaften aufweist.

Diese Aufgabe wird erfindungsgemäß in der Weise gelöst, daß in einem ersten Verfahrensschritt die auf Trägerschichten aufgebrachten strahlungshärtbaren Schichten teilweise durchgehärtet werden und daß in einem zweiten Verfahrensschritt die strahlungshärtbaren Schichten vollständig durchgehärtet werden.

Die Ausgestaltung des erfindungsgemäßen Verfahrens zeichnet sich dadurch aus, daß im ersten Verfahrensschritt auf eine erste Trägerschicht die mit Farbpigmenten ausgerüstete erste strahlungshärtbare Schicht aufgebracht wird, daß auf eine zweite Trägerschicht die mit Farbpigmenten ausgerüstete zweite strahlungshärtbare Schicht aufgebracht wird, wobei die Farbpigmente der ersten und der zweiten Schicht unterschiedlich sind, daß die beiden Trägerschichten mit einander zugewandten strahlungshärtbaren Schichtenzu einem Mehrschichtverbund laminiert und die strahlungshärtbaren Schichten teilweise durchgehärtet werden, und daß im zweiten Verfahrensschritt der Mehrschichtverbund mit einer Kunststoffolie, auf der eine strahlungshärtbare Klardeckschicht aufgebracht wird, die dem Mehrschichtverbund zugewandt ist, laminiert wird und daß die aneinandergrenzenden Schichten vollständig durchgehärtet werden.

In Ausführung des Verfahrens wird die teilweise und die vollständige Aushärtung der Schichten mit Hilfe aktinischer Strahlung vorgenommen. Dabei werden als aktinische Strahlungen beschleunigte Elektronen, UV-Strahlung im Wellenlängenbereich von 50 bis 480 nm oder Röntgenstrahlung im Wellenlängenbereich von 0.05 bis 8.0 nm eingesetzt.

In weiterer Ausgestaltung des Verfahrens werden strahlungshärtbare Schichten auf der Basis von (C1 bis C6)Alkyl-Acrylaten und/oder Methacrylaten, insbesondere auf der Basis Methyl- oder Ethylacrylaten und/oder Methacrylaten eingesetzt.

In Weiterbildung des Verfahrens wird die Dosis an aktinischer Strahlung in den Verfahrensschritten so eingestellt, daß erst mit dem letzten Bestrahlungsvorgang die für die vollständige Aushärtung der strahlungshärtbaren Schichten erforderliche Strahlungsmenge appliziert wird

Falls die zur vollständigen Aushärtung theoretisch notwendige Strahlungsmenge schon vor dem letzten Bestrahlungsvorgang erreichtwird, kann die Haftfestigkeit der Klardeckschicht nachteilig beeinträchtig werden.

Die weitere Ausgestaltung des Verfahrens ergibt sich aus den Maßnahmen der Anspruche 7 bis 15.

Im Rahmen der Erfmdungwird mittels des Verfahrens ein zwei- oder mehrfarbiger Mehrschichtverbund geschaffen, der aus einer Trägerschicht mit glatter regelmäßiger Oberfläche, die eine Kunststoffolie oder ein mit Phenolharz imprägniertes Papierband ist, zwei oder drei miteinander laminierten, mittels Strahlung ausgehärteten Schichten auf Acrylbasis, die unterschiedliche Farbpigmente enthalten, einer Klardeckschicht auf Acrylbasis sowie einer abziehbaren Kunststoffolie als Schutzschicht besteht

Ein derartiger Mehrschichtverbund ist als Dekorbeschichtung mit Platten aus mit Phenol-und/oder Melaminharzen getränkten Papierlagen, aus Kartonagen, Holz, Kunststoff, harzgetränkten miteinander verpreßten Holzschnitzeln oder dergleichen zu wetterfesten Paneelen für den Außeneinsatz verbunden.

Die Erfindung wird im folgenden anhand der Zeichnungen näher erläutert. Es zeigen:
- Figur 1: schematisch den Verfahrensablauf bei der Herstellung eines einfarbigen Mehrschichtverbundes aus einem Papiertrager, einer härtbaren Farbschicht, einer Klardeckschicht und einer Kunststoffolie nach dem Stand der Technik,
- Figur 2a: schematisch den ersten Verfahrensschritt bei der Herstellung eines zumindest zweifarbigen Mehrschichtverbundes nach der Erfindung,
- Figur 2b: schematisch den zweiten Verfahrenschritt bei der Herstellung eines zumindest zweifarbigen Mehrschichtverbundes,
- Figur 2c: einen gegenüberFigur 2b modifizierten zweiten Verfahrensschritt zur Herstellung eines dreifarbigen Mehrschichtsverbundes nach der Erfindung, in schematischer Darstellung.
- Figur 3a: schematisch einen gegenüber Fig. 2a modifizierten ersten Verfahrensschritt zur Herstellung eines metallisch aussehenden Mehrschichtverbunds nach der Erfindung, und
- Figur 3b: schematisch einen gegenüber Fig. 2b modifizierten zweiten Verfahrensschritt zur Herstellung eines metallisch aussehenden Mehrschichtverbunds,

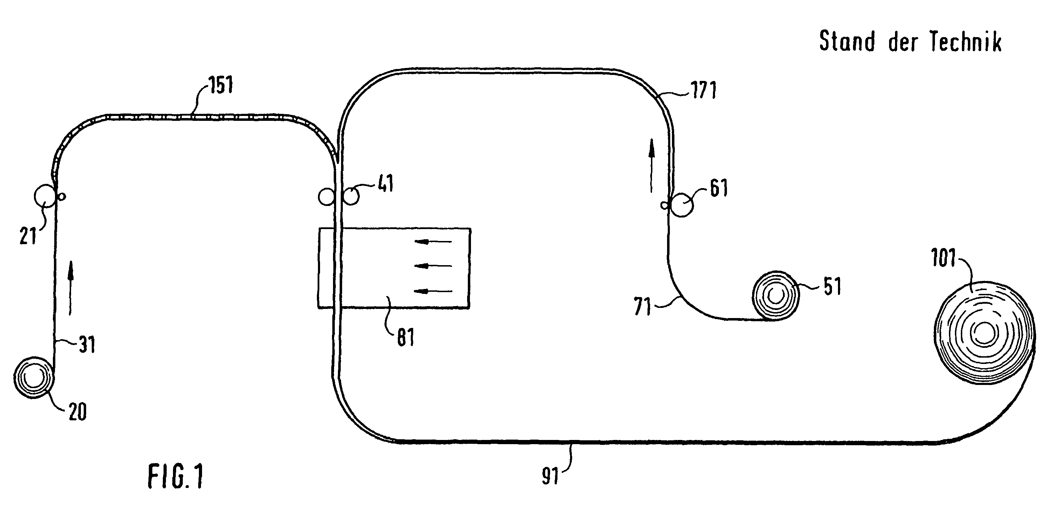

In Fig. 1 ist auf einer Vorratsrolle 20 ein mit Phenolharz getränktes bzw. imprägniertes Papiersubstrat 31 aufgewickelt. Das bandförmige Papiersubstrat 31 wird von der Vorratsrolle 20 abgewickelt und durchlauft eine Druckstation 21, in der im Sieb- oder Schablonendruck eine Farbschicht 151 aufgebracht wird. Bei dieser Farbschicht 151 handelt es sich um eine acrylische Schicht, die Farbpigmente enthält.

Des weiteren wird von einer Kunststoffolie-Vorratsrolle 51, auf der eine bandförmige Kunststoffolie 71 aufgewickelt ist, diese abgewickelt und durch eine weitere Druckstation 61 hindurchgeführt. In dieser Druckstation 61 erfolgt im Sieb- oder Schablonendruck das Aufbringen einerfarblosen Schutzschicht auf die Kunststoffolie 71, bei der es sich beispielsweise um einPolyolefin, wie Polyethylen, Polypropylen, Polyesterund dergleichen mehr handeln kann Die farblose Schutzschicht 171 basiert gleichfalls auf acrylischer Basis. Das Papiersubstrat 31 mit der Farbschicht 151 und die Kunststoffolie 71 mit der farblosen Schutzschicht 171 werden in einer Laminierstation 41 zusammengeführt und mit Hilfe von Wärme- und/oder Druck zu einem Mehrschichtverbund 91 miteinander laminiert. Nach dem Verlassen der Laminierstation 41 durchläuft der Mehrschichtverbund 91 eine Aushärtestation 81, in der mittels beschleunigter Elektronen die beiden aneinander anliegenden Schichten, nämlich die Farbschicht 151 und die Schutzschicht 171 vollständig ausgehärtet werden und somit einen festen Verbund bilden Der Mehrschichtverbund 91 ist ein einfarbiges Laminat, mit einer optisch klaren Deck- bzw. Schutzschicht 171 und wird auf eine Mehrschichtverbund-Vorratsrolle 101 aufgewickelt.

Dieses bekannte Verfahren ermöglicht es nicht einen zwei- oder mehrfarbigen Mehrschichtverbund, der härtbare Schichten enthalt, ohne Klebemittelschichten herzustellen, da unmittelbar nach dem Laminieren der Schichten zu dem Mehrschichtverbund eine vollständige Aushärtung der Schichten erfolgt. Dadurch ist es nicht möglich, noch weitere Schichten ohne Zuhilfenahme von Klebemittelschichten, miteinander zu verbinden.

Die Aushärtung der Schichten kann ganz allgemein mit aktinischer Strahlung vorgenommen werden, worunter im Rahmen dieser Erfindung neben hochbeschleunigten Elektronen, wie sie in der Aushärtestation 81 bevorzugt eingesetzt werden, auch UV-Strahlung im Wellenlängenbereich von 50 bis 480 nm oder Röntgenstrahlung im Wellenlängenbereich von 0.05 bis 8.0 nm zu verstehen ist.

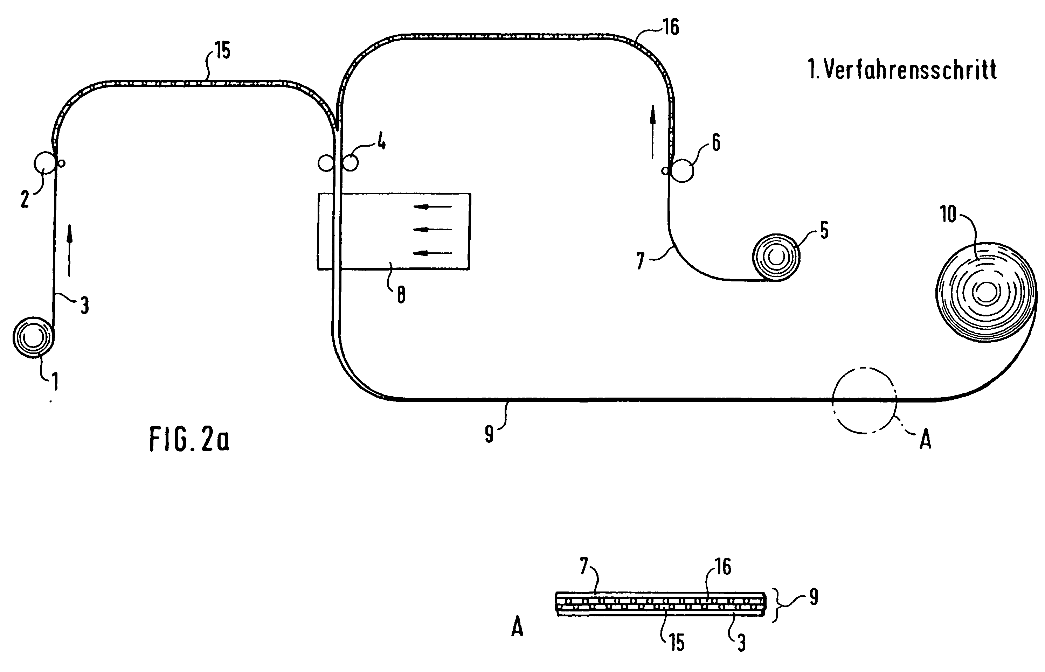

Für die Aushärtung durch Bestrahlen mit beschleunigten Elektronen reicht im allgemeinen eine maximale Dosis von bis zu 60 k Gray aus. Nach dem Aushärten mit einer derartigen Dosis hat der Großteil der reaktiven Acrylgruppen reagiert und die ausgehärteten Schichten sind vollständig trocken und fest. Werden die hartbaren Schichten mit einer niedrigeren Dosis als voranstehend angegeben, bestrahlt, so wird nur eine teilweise Härtung erreicht, wodurch noch ausreichend genug reaktive Acrylgruppen übrig bleiben, die mit einer weiteren Acrylschicht reagieren können.Von diesem Grundgedanken wird bei dem erfindungsgemäßen Verfahren ausgegangen, wie anhand der Figuren 2a bis 3b näher erläutert wird.

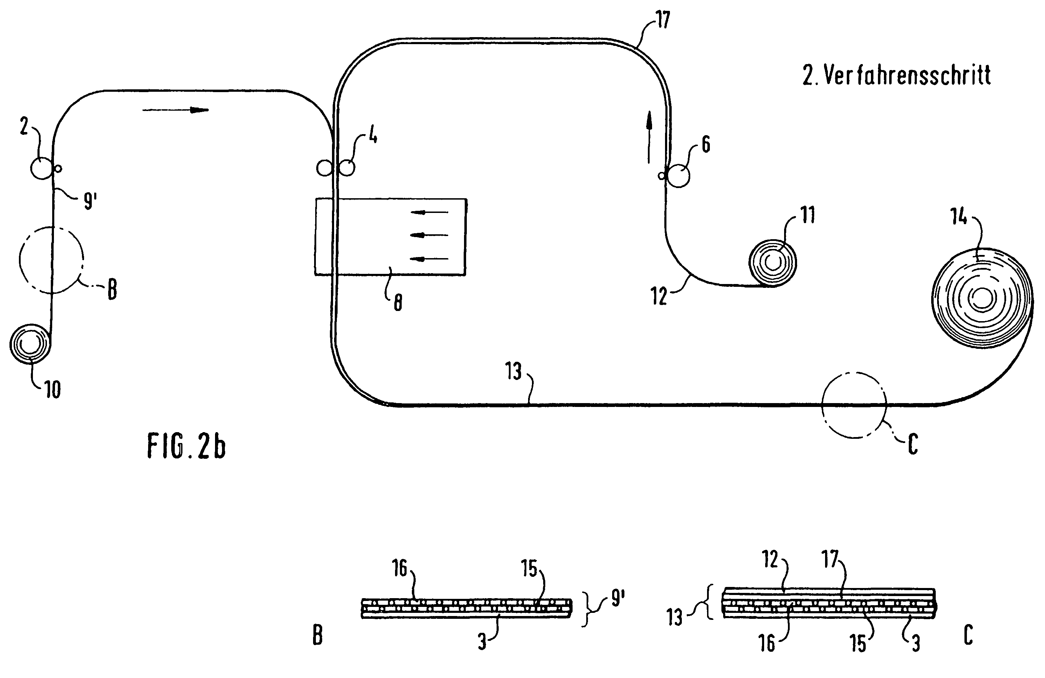

In einem ersten Verfahrensschritt wie er in Figur 2a dargestellt ist, wird eine erste Trägerschicht 3, bei der es sich beispielsweise um ein Folienband oder um ein mit Phenolharz getränktes Papierband handelt, mit einer ersten strahlungshärtbaren Schicht 15 ausgerüstet. Diese erste härtbare Schicht ist eine Schicht auf Acrylbasis und enthält Farbpigmente einer bestimmten Farbe. Die Trägerschicht 3 ist auf einer ersten Vorratsrolle 1 aufgewickelt und wird nach dem Abwickeln durch eine erste Druckstation 2 hindurchgeführt, in der im Sieb- oder Schablonendruck die erste härtbare Schicht 15 aufgebracht wird. Auf einer zweiten Vorratsrolle 5 ist eine zweite Trägerschicht 7, beispielsweise eine Kunststoffolie, in Bandform aufgewickelt Diese zweite Trägerschicht 7 wird von der zweiten Vorratsrolle 5 abgewickelt und durchläuft eine zweite Druckstation 6, in der durch Sieb- oder Schablonendruck eine zweite strahlungshärtbare Schicht 16 aufgebracht wird, die Farbpigmente in einer bestimmten Farbe enthält. Diese Farbpigmente unterscheiden sich von den Farbpigmenten der ersten härtbaren Schicht 15. Die beiden Trägerschichten 3 und 7 mit den einander zugewandten Schichten 15, 16 werden unmittelbar vor einer ersten Laminierstation 4 zusammengeführt und in dieser unter Wärme- und/oder Druckeinwirkung zu einem Mehrschichtverbund 9 zusammengepreßt, der im Detail A im Schnitt gezeigt ist. Nach dem Verlassen der Laminierstation 4 durchläuft der Mehrschichtverbund 9 eine erste Aushärtestation 8, in der beschleunigte Elektronen die beiden Schichten 15, 16 teilweise aushärten. Die Dosis der Elektronenstrahlung liegt im Bereich von 0,5 bis 30 k Gray, die nicht ausreicht, die beiden Schichten vollständig durchzuhärten bzw. auszuhärten. Es ist auch möglich, an Stelle von beschleunigten Elektronen die Härtung mit einer UV-Strahlung im Wellenlängenbereich von 50 bis 480 nm oder einer Röntgenstrahlung im Wellenlängenbereich von 0.05 bis 8.0 nm durchzuführen. Die teilweise Aushärtung der Schichten 15, 16 erfolgt im ersten Verfahrensschritt mit höchstens 30 % der maximal erforderlichen Dosis der Strahlung, die für die vollständige Aushärtung der Schichten erforderlich ist. Auf diese Weise wird ein Zweifarben-Mehrschichtverbund 9 erhalten, der auf eine Mehrschichtverbund-Vorratsrolle 10 aufgewickeltwird. Im Anschluß daran erfolgte der zweite Verfahrensschritt, gemäß Figur 2b, bei dem der zweifarbige Mehrschichtverbund 9 die vorhandene Anlage ein zweites Mal durchläuft. Hierzu tritt die Mehrfarbenverbund-Vorratsrolle 10 an die Stelle der ersten Vorratsrolle 1 im ersten Verfahrensschrittund der Mehrschichtverbund 9 wird von der Vorratsrolle 10 abgewickelt. Vor dem zweiten Verfahrensschritt wird zweckmäßigerweise die zweite Trägerschicht 7 von dem Mehrschichtverbund 9 abgetrennt. Der Mehrschichtverbund 9 ohne die abgetrennte Trägerschicht 7 ist im Detail B im Schnitt dargestellt und durchläuft die erste Druckstation 2, die im vorliegenden Fall, da keine weitere Farbschicht aufgebracht werden soll, ausgeschaltet ist.

Von einer dritten Vorratsrolle 11 wird eine bandförmige Kunststoffolie 12 abgewickelt und durchläuft die zweite Druckstation 6, in der im Sieb- bzw. Schablonendruck eine optisch klare Schicht, nämlich eine sogenannte Klardeckschicht 17, aufgebracht wird. Diese enthält keine Farbpigmente, ist jedoch ebenso wie die Schichten 15 und 16 eine acrylische Schicht und durch aktinische Strahlung härtbar. Der Mehrschichtverbund 9 und die als Schutzfolie wirkende Kunststoffolie 12 mit der aufgetragenen Klardeckschicht 17 werden vor oder in der Laminierstation 4 zusammengeführt und in dieser Laminierstation mittels Wärme und/oder Druck miteinander laminiert. Nach dem Verlassen der Laminierstation 4 durchläuft das Laminat aus zweifarbigen Mehrschichtverbund 9 und der Klardeckschicht 17 zusammen mit der Kunststoffolie 12 die Aushartestation 8, die beim zweiten Verfahrensschritt mit voller Leistung, d.h. mit einer Dosis von 1,65 bis 100 k Gray der beschleunigten Elektronen die Klardeckschicht 17 mit den beiden schon teilweise ausgehärteten Schichten 15 und 16 verbindet. Durch die volle Strahlungsleistung der Aushärtestation 8 werden die härtbaren Schichten 15, 16, 17 vollständig ausgehärtet und bilden in dem zweifarbigen Mehrschichtverbund 13 eine trockene und festhaftende Lage. Dieser Mehrschichtverbund 13 wird auf eine Mehrschichtverbund-Vorratsrolle 14 aufgewickelt. Das Detail C zeigt vergrößert im Schnitt den Mehrschichtverbund 13.

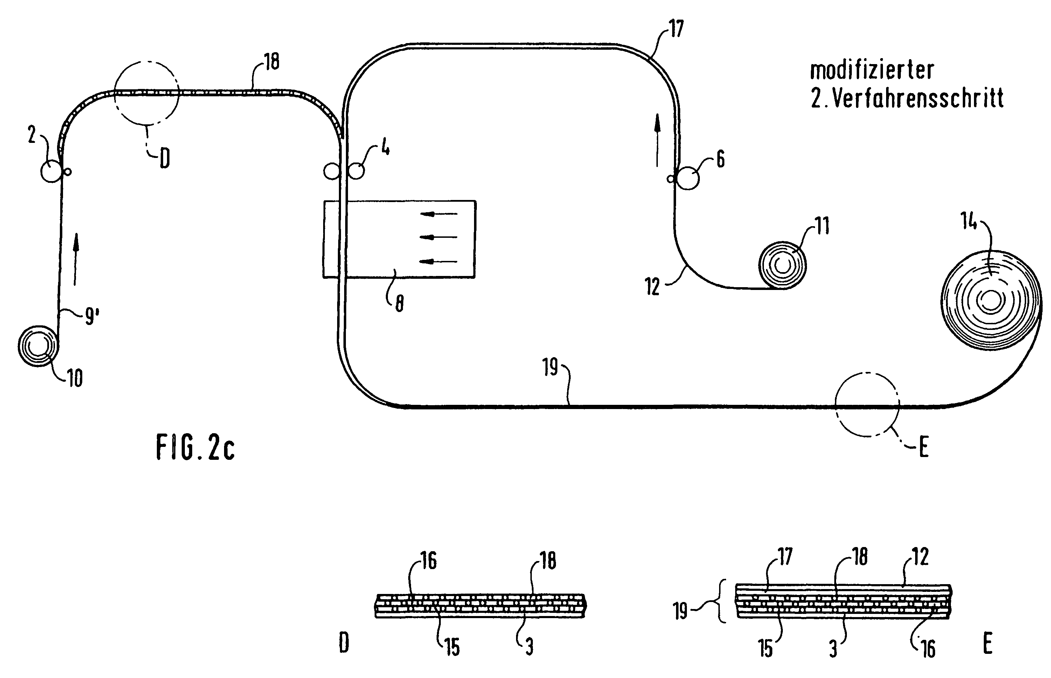

Es ist ebenso möglich, im zweiten Verfahrenschritt noch eine weitere Farbschicht aufzubringen, um so einen dreifarbigen Mehrschichtverbund zu erhalten. Hierzu ist es nur erforderlich, daß im sogenannten modifizierten zweiten Verfahrensschritt, wie in Figur 2c gezeigt, beim Durchlauf des zweifarbigen Mehrschichtverbundes 9 durch die erste Druckstation 2 durch Sieb- bzw Schablonendruck eine strahlungshärtbare Schicht 18, die mit Farbpigmenten ausgerüstet ist, aufgetragen wird. Das Detail D zeigt den Mehrschichtverbund mit den härtbaren Schichten 15, 16 und 18 sowie der ersten Trägerschicht 3 im Schnitt. Die übrige Verfahrensweise ändert sich gegenüber dem zweiten Verfahrensschritt nach Figur 2b nicht. Der so hergestellte Mehrschichtverbund 19 aus erster Trägerschicht 3, den härtbaren Schichten 15, 16 und 18 mit Farbpigmenten, der Klardeckschicht 17 und der Schutzfolie 12 sind im Detail E im Schnitt gezeigt.

Die hartbaren Schichten 15, 16, 17 und 18 werden beispielsweise auf der Basis von (C1 bis C6)Alkyl-Acrlyaten und/oder Methacrylaten, insbesondere auf der Basis Methyl- oder Ethylacrylaten und/oder Methacrylaten eingesetzt. Daneben können noch Einheiten aus Comonomeren, insbesondere Acrylnitril, Alkylvinylether verwendet werden.

Ganz allgemein gilt bei dem Verfahren, daß die Dosis an aktinischer Strahlung, die in der Aushärtestation 8 appliziert wird, so eingestellt ist, daß erst mit dem letzten Bestrahlungsvorgang die für die vollständige Aushärtung der härtbaren Schichten erforderliche Strahlungsmenge aufgebracht wird. So werden im ersten Verfahrensschritt die härtbaren Schichten 15, 16 mit höchstens 3 0 % der max. erforderlichen Dosis der aktinischen Strahlung für die volle Aushartung beaufschlagt. Im zweiten Verfahrensschrittwerden die beiden teilweise ausgehärteten Schichten 15,16 und die Klardeckschicht 17 mit einer Dosis von 30 % bis 100 % der aktinischen Strahlung für die volle Aushärtung beaufschlagt. Dies gilt auch für den Fall, bei dem im modifizierten zweiten Verfahrensschritt auf den Mehrschichtverbund 9 zusätzlich noch eine härtbare Schicht 18 mitFarbpigmenten aufgebracht wird. Diese Farbpigmente unterscheiden sich in derFarbe von den Farbpigmenten der härtbaren Schichten 15 und 16. Bevorzugt werden die Farbpigmente der Schichten 15, 16 und 18 aus der Gruppe Metalloxide, -hydroxide, und oxidhydrate, schwefelhaltige Silicate, Metallsulfide und -selenide, komplexe Metallcyanide, Metallsulfate, -chromate und molybdate, Azopigmente, Indigoide, Dioxazin-, Chinacridon-, Phthalocyanin-, Isoindolinon-, Perylen- und Perinon-, Metallkomplex-, Alkaliblau- und Diketopyrrolopyrrol(DPP)-Pigmente ausgewählt.

In weiterer Ausgestaltung des Verfahrens können die härtbaren Schichten 15 bis 18 auf die zugehörigen Trägerschichten durch Gießen oder Druckwalzen aufgebracht werden anstelle von Sieb- bzw. Schablonendruck.

Die Kunststoffolien werden insbesondere aus der Gruppe der Polyolefinen wie Polyethylen, Polypropylen, Polyester oder aus der Gruppe der Polyamide ausgewählt.

Der nach dem Verfahren erhaltene zwei- oder mehrfarbige Mehrschichtverbund 13 besteht somit aus einer Trägerschicht, die eine Folie oder ein mit Phenolharz imprägniertes Papierband 3 ist, zwei oder drei miteinander laminierten, ausgeharteten Schichten 15, 16, 18 auf Acrylbasis, die jeweils voneinander unterschiedliche Farbpigmente enthalten, einer Klardeckschicht 17 auf Acrylbasis sowie einer abziehbaren Kunststoffolie 12 als Schutzschicht. Dieser Mehrschichtverbund 13 dient bevorzugt als Dekorbeschichtung von Platten, die aus mit Phenol- und/oder Melaminharzen getränkten Papierlagen, aus Kartonagen, Holz, Kunststoff, harzgetränkte miteinander verpreßten Holzschnitzeln oder dergleichen bestehen. Durch das Aufbringen dieses Mehrschichtverbundes 13 auf derartige Platten werden wetterfeste Paneele bzw. Dekorplatten für denAußeneinsatz an Gebäuden beispielsweise als Fassadenverkleidungund in Feuchträumen erhalten.

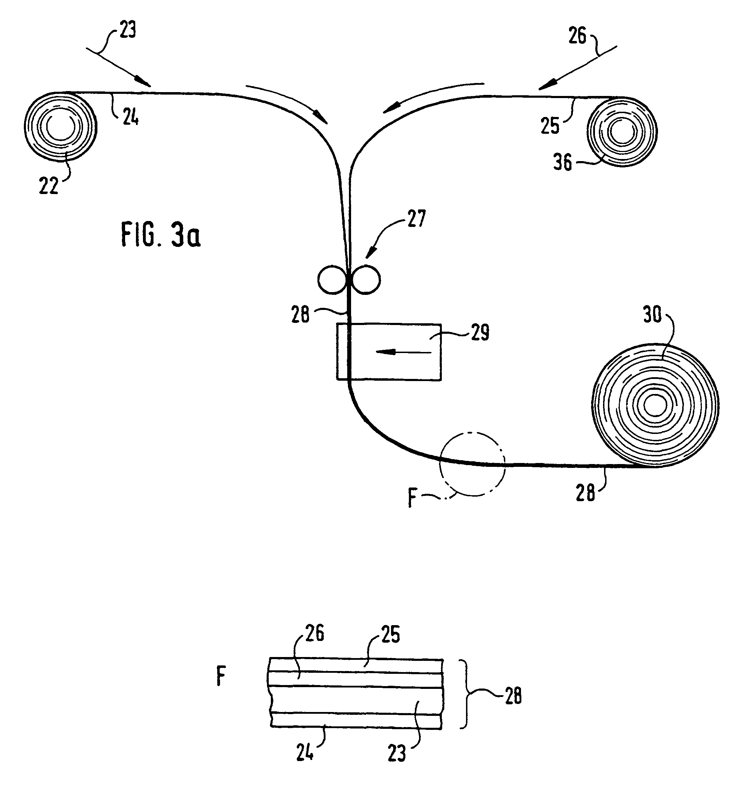

Bei dem modifizierten ersten Verfahrensschritt wie er anhand von Fig. 3a beschrieben wird, ist auf einer vierten Vorratsrolle 22 eine dritte, bandförmige Trägerschicht 24 aufgewickelt. Die Trägerschicht 24 ist beispielsweise eine Kunststoffolie, bevorzugt eine Polypropylenfolie mit einer sehr gleichmäßige, glatten Oberfläche. Die Trägerschicht 24 wird von der Vorratsrolle 22 abgezogen und es wird eine metallische Beschichtung 23 auf die Trägerschicht 24 aufgebracht. Die metallische Beschichtung 23 besteht aus einer Schicht auf Acrylat-Basis, in der Farbpigmente dispergiert sind. Bei den Farbpigmenten handelt es sich bevorzugt um Metalloxid-Pigmente, insbesondere um Aluminiumoxid-Pigmente, die der metallischen Beschichtung 23 ein metallfarbenes Aussehen verleihen.

Auf einer sechsten Vorratsrolle 36 ist eine vierte Trägerschicht 25 aufgewickelt, auf die nach dem Abwickeln von der Vorratsrolle 36 eine strahlungshärtbare Klarschicht 26 aufgebracht wird. Bei der Trägerschicht 25 handelt es sich gleichfalls um eine Kunststoffolie mit glatter gleichmäßiger Oberfläche. Die beiden Trägerschichten 24, 25 mit den einander zugewandten metallischen Beschichtung 23 und Klarschicht 26 werden in einer zweiten Laminierstation 27 zusammengeführt und in dieser mittels Druck- und/oder Wärme zu einem Mehrschichtverbund 28 laminiert, der unmittelbar nach dem Austritt aus der Laminierstation 27 eine zweite Aushärtestation 29 durchläuft. In dieser Aushärtestation 29 werden die Klarschicht 26 und die metallische Beschichtung 23 mittels einer Elektronenstrahlung mit einer Dosis von 2 bis 30 kGray teilweise ausgehärtet und danach auf eine Mehrschichtverbund-Vorratsrolle 30 aufgewickelt Der Mehrschichtverbund 28 ist im Detail F vergrößert im Schnitt dargestellt.

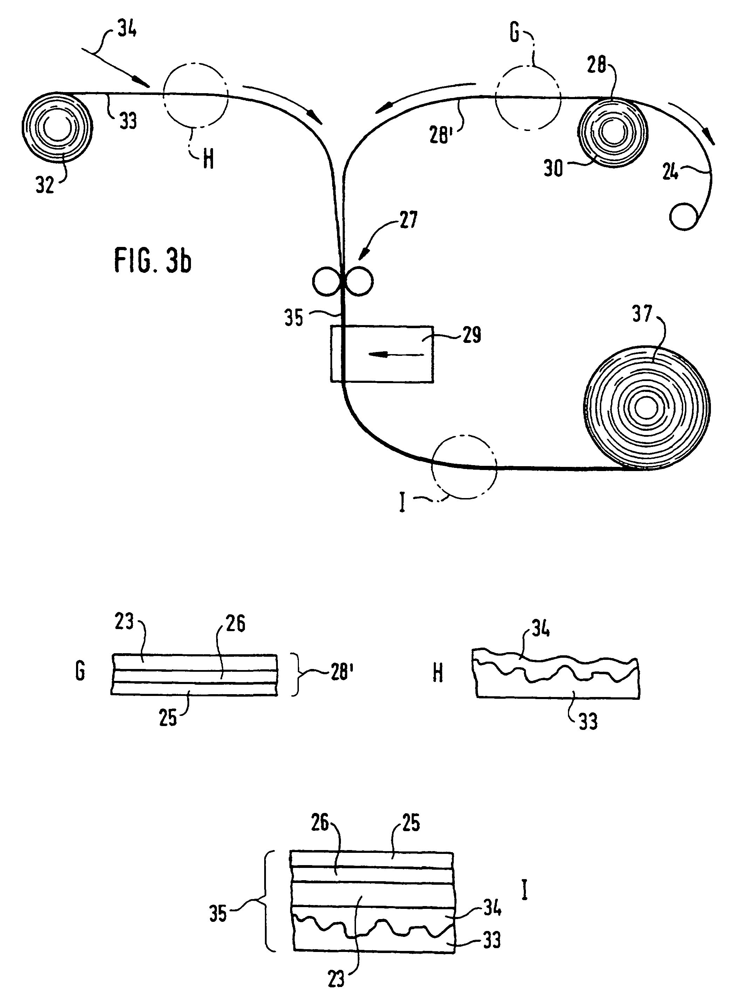

Im modifizierten zweiten Verfahrensschritt befindet sich die Mehrschichtverbund-Vorratsrolle 30 in Fig. 3b auf der rechten Seite und es wird bei der Abwicklung des Mehrschichtverbunds 28 von der Vorratsrolle 30 zugleich die Trägerschicht 24 von der metallischen Beschichtung 23 abgezogen. Der Mehrschichtverbund 28 ohne die Trägerschicht 24 ist im Schnitt im Detail G dargestellt.

Auf der linken Seite in Fig 3b ist auf einer funften Vorratsrolle 32 eine fünfte Trägerschicht 33 mit stark ungleichmäßiger Oberfläche aufgewickelt, auf der nach dem Abwickeln von der Vorratsrolle 32 eine Grundierungs- und/oder Haftvermittlerschicht 34 aus einer strahlungshärtbaren Grundierung und/oder einem strahlungshärtbaren Haftvermittler aufgebracht wird. Ein Schnitt durch die Trägerschicht 33 und die Grundierungs- und/oder Haftvermittlerschicht 34 zeigt das Detail H. Die Trägerschicht 33 ist beispielsweise ein mit Phenolharz imprägniertes Papierband oder ein sogenanntes Kraftpapier.

Der Mehrschichtverbund 28 ohne die Trägerschicht 24 sowie die Trägerschicht 33 mit der aufgebrachten Grundierungs- und/oder Haftvermittlerschicht 34 werden in der zweiten Laminierstation 27 zusammengeführt und in dieser mittels Wärme und/oder Druck zu einem Mehrschichtverbund 35 zusammengepreßt. Danach durchlauft der Mehrschichtverbund 35 die zweite Aushärtestation 29, in der mittels beschleunigter Elektronen, mit einer Dosis der Elektronenstrahlung von 6,7 bis 100 kGray eine vollständige Durchhärtung der Schichten 23,26 und 34 des Mehrschichtverbunds 35 erfolgt. Den Aufbau des Mehrschichtverbunds 35 zeigt das Detail I im Schnitt Der Mehrschichtverbund 35 wird auf eine Mehrschichtverbund-Vorratsrolle 37 aufgewickelt und zur Weiterverarbeitung als Dekorbeschichtung für Platten und Paneelen verwendet.

Die Aushärtestation 29 kann auch eine UV- oder Röntgenstation sein, wobei die Härtung der Schichten mit Hilfe von UV-Strahlung im Wellenlangenbereich von 50 bis 480 nm oder Röntgenstrahlungen im Wellenlängenbereich von 0.05 bis 8 nm erfolgt.

## Patentansprüche

1. Verfahren zur Herstellung eines farbigen Mehrschichtverbundes, bei dem zwei oder mehrere strahlungshärtbare Schichten, von denen eine Schicht eine Klardeckschicht ist und die übrigen Schichten mit Farbpigmenten ausgerüstet sind, miteinander laminiert und ausgehärtet werden, **dadurch gekennzeichnet, daß** in einem
- ersten Verfahrensschritt die auf Trägerschichten (3, 7; 24, 25; 33) aufgebrachten strahlungshärtbaren Schichten (15, 16; 23, 26; 34) teilweise durchgehärtet werden und daß in einem
- zweiten Verfahrensschritt die strahlungshärtbaren Schichten (15, 16; 23, 26; 34) vollständig durchgehärtet werden.

2. Verfahren nach Anspruch 1, **dadurch gekennzeichnet, daß**
- im ersten Verfahrensschritt auf eine erste Trägerschicht (3) die mit Farbpigmenten ausgerüstete erste strahlungshärtbare Schicht (15) aufgebracht wird, daß auf eine zweite Trägerschicht (7) die mit Farbpigmenten ausgerüstete zweite strahlungshärtbare Schicht (16) aufgebracht wird, wobei die Farbpigmente der ersten und der zweiten Schicht (15,16) unterschiedlich sind, daß die beiden Trägerschichten (3,7) mit einander zugewandten strahlungshärtbaren Schichten (15,16) zu einem Mehrschichtverbund (9) laminiert und die strahlungshärtbaren Schichten (15,16) teilweise durchgehärtet werden, und daß
- im zweiten Verfahrensschritt der Mehrschichtverbund (9) mit einer Kunststoffolie (12), auf der eine strahlungshärtbare Klardeckschicht (17) aufgebracht wird, die dem Mehrschichtverbund (9) zugewandt ist, laminiert wird und daß die aneinandergrenzenden Schichten (15,16,17) vollständig durchgehärtet werden.

3. Verfahren nach den Ansprüchen 1 und 2, **dadurch gekennzeichnet, daß** die teilweise und die vollständige Aushärtung der Schichten (15, 16, 17, 23, 26, 34) mit Hilfe aktinischer Strahlung vorgenommen wird.

4. Verfahren nach Anspruch 3, **dadurch gekennzeichnet, daß** als aktinische Strahlung beschleunigte Elektronen, UV-Strahlung im Wellenlängenbereich von 50 bis 480 nm oder Röntgenstrahlung im Wellenlängenbereich von 0.05 bis 8.0 nm eingesetzt werden.

5. Verfahren nach den Ansprüchen 1 und 3, **dadurch gekennzeichnet, daß**strahlungshärtbare Schichten (15, 16, 17, 23, 26, 34) auf der Basis von (C1 bis C6)Alkyl-Acrylaten und/oder Methacrylaten, insbesondere auf der Basis Methyl- oder Ethylacrylaten und/oder Methacrylaten eingesetzt werden.

6. Verfahren nach den Ansprüchen 1 bis 5, **dadurch gekennzeichnet, daß** die Dosis an aktinischer Strahlung in den Verfahrensschritten so eingestellt wird, daß erst mit dem letzten Bestrahlungsvorgang die für die vollständige Aushärtung der strahlungshärtbaren Schichten erforderliche Strahlungsmenge appliziert wird.

7. Verfahren nach Anspruch 6, **dadurch gekennzeichnet, daß** die strahlungshärtbaren Schichten (15, 16, 17, 23, 26, 34) im ersten Verfahrensschritt mit höchstens 30 % der maximal erforderlichen Dosis der aktinischen Strahlung für die volle Aushärtung beaufschlagt werden.

8. Verfahren nach Anspruch 7, **dadurch gekennzeichnet, daß** die teilweise ausgehärteten Schichten (15, 16, 17, 23, 26, 34) im zweiten Verfahrenschritt mit einer Dosis von 30 % bis 100 % der aktinischen Strahlung für die volle Aushärtung beaufschlagt werden.

9. Verfahren nach Anspruch 1, **dadurch gekennzeichnet, daß** die Farbpigmente der Schichten (15, 16, 23, 34) aus der Gruppe Metalloxide, -hydroxide, und oxidhydrate, schwefelhaltige Silicate, Metallsulfide und -selenide, komplexe Metallcyanide, Metallsulfate, -chromate und -molybdate, Azopigmente, Indigoide, Dioxazin-, Chinacridon-, Phthalocyanin-, Isoindolinon-, Perylen- und Perinon-, Metallkomplex-, Alkaliblau- und Diketopyrrolopyrrol(DPP)-Pigmente ausgewählt werden.

10. Verfahren nach einem der Ansprüche 1 bis 8, **dadurch gekennzeichnet, daß** die strahlungshärtbaren Schichten (15, 16, 17) auf die zugehörigen Trägerschichten (3, 7, 12) durch Sieb- oder Schablonendruck aufgetragen werden.

11. Verfahren nach einem der Ansprüche 1 bis 8, **dadurch gekennzeichnet, daß** die strahlungshärtbaren Schichten (15, 16, 17) auf die zugehörigen Trägerschichten (3, 7, 12) durch Gießen oder mittels Druckwalzen aufgebracht werden.

12. Verfahren nach Anspruch 2, **dadurch gekennzeichnet, daß** als erste Trägerschicht (3) ein mit Phenolharz imprägniertes bandförmiges Papier, als zweite und weitere Trägerschicht (7, 12) je eine bandförmige Kunststoffolie eingesetzt werden.

13. Verfahren nach Anspruch 12, **dadurch gekennzeichnet, daß** die Kunststoffolie aus der Gruppe der Polyolefine wie Polyethylen, Polypropylen, Polyester oder der Polyamide ausgewählt wird.

14. Verfahren nach Anspruch 2, **dadurch gekennzeichnet, daß** vor dem zweiten Verfahrensschritt die zweite Trägerschicht (7) von dem Mehrschichtverbund (9) abgetrennt wird.

15. Verfahren nach Anspruch 2, **dadurch gekennzeichnet, daß** im zweiten Verfahrensschritt auf den Mehrschichtverbund (9) eine dritte, mit Farbpigmenten ausgerüstete, mit Hilfe aktinischer Strahlung härtbare Schicht (18) aufgetragen wird.

16. Farbiger Mehrschichtverbund, der hergestellt werden kann nach dem Verfahren gemäß den Ansprüchen 1 bis 15, **dadurch gekennzeichnet, daß** er aus einer Trägerschicht (3) mit glatter regelmäßiger Oberfläche, die eine Kunststoffolie oder ein mit Phenolharz imprägniertes Papierband ist, zwei oder drei miteinander laminierten, mittels Strahlung ausgehärteten Schichten (15, 16, 18) auf Acrylbasis, die unterschiedliche Farbpigmente enthalten, einer Klardeckschicht (17) auf Acrylbasis sowie einer abziehbaren Kunststoffolie (12) als Schutzschicht besteht.

17. Farbiger Mehrschichtverbund, der hergestellt werden kann nach dem Verfahren gemäß einem oder mehreren der Ansprüche 1 bis 15, **dadurch gekennzeichnet, daß** er aus einer Trägerschicht (33) mit stark unregelmäßiger Oberfläche, einer Grundierungs-und/oder Haftvennittlerschicht (34), einermetallischen Beschichtung (23), einer Klarschicht(26) und einer abziehbaren Trägerschicht (25) aus einer Kunststoffolie besteht und daß die Schichten (34, 23, 26) miteinander laminiert und durch Strahlung ausgehärtet sind.

18. Farbiger Mehrschichtverbund nach Anspruch 16 oder 17, der als Dekorbeschichtung mit Platten oder Paneelen aus mit Phenol-und/oder Melaminharzen getränkten Papierlagen, aus Kartonagen, Holz, Kunststoff, harzgetränkten miteinander verpreßten Holzschnitzeln zu wetterfesten Platten oder Paneelen die gegen Witterungseinflüsse dauerbeständige Dekoreigenschaften aufweisen, verbunden ist.

## Claims

1. A method of producing a coloured multilayer composite, in which two or more radiation-curable layers, of which one layer is a clear outer layer and the other layers are provided with coloured pigments, are laminated together and cured, **characterised in that** in a
- first method step the radiation-curable layers (15, 16; 23, 26; 34) applied to substrates (3, 7; 24, 25; 33) are partially cured to completion and **in that** in a
- second method step the radiation-curable layers (15, 16; 23, 26; 34) are completely cured to completion.

2. A method according to claim 1, **characterised in that**
- in the first method step, the first radiation-curable layer (15) provided with coloured pigments is applied to a first substrate (3), **in that** the second radiation-curable layer (16) provided with coloured pigments is applied to a second substrate (7), wherein the coloured pigments of the first and second layers (15, 16) are different, **in that** the two substrates (3, 7) are laminated with their radiation-curable layers (15, 16) facing one another to yield a multilayer composite (9) and the radiation-curable layers (15, 16) are partially cured to completion, and **in that**
- in the second method step, the multilayer composite (9) is laminated together with a plastics film (12), onto which a radiation-curable clear outer layer (17) is applied, which faces the multilayer composite (9), and **in that** the mutually adjoining layers (15, 16, 17) are completely cured to completion.

3. A method according to claims 1 and 2, **characterised in that** the partial and complete curing of the layers (15, 16, 17, 23, 26, 34) is carried out by means of actinic radiation.

4. A method according to claim 3, **characterised in that** accelerated electrons, UV radiation in the wavelength range of 50 to 480 nm or X-radiation in the wavelength range of 0.05 to 8.0 nm are used as actinic radiation.

5. A method according to claims 1 and 3, **characterised in that** radiation-curable layers (15, 16, 17, 23, 26, 34) are used which are based on (C1 to C6) alkyl acrylates and/or methacrylates, in particular based on methyl or ethyl acrylates and/or methacrylates.

6. A method according to claims 1 to 5, **characterised in that** the dose of actinic radiation is so adjusted in the method steps that only with the last irradiation process is the quantity of radiation necessary for complete curing of the radiation-curable layers applied.

7. A method according to claim 6, **characterised in that**, in the first method step, the radiation-curable layers (15, 16, 17, 23, 26, 34) are exposed to at most 30% of the maximum dose of actinic radiation required for complete curing.

8. A method according to claim 7, **characterised in that**, in the second method step, the partially cured layers (15, 16, 17, 23, 26, 34) are exposed to a dose of 30% to 100% of the actinic radiation required for complete curing.

9. A method according to claim 1, **characterised in that** the coloured pigments of the layers (15, 16, 23, 34) are selected from the group comprising metal oxides, hydroxides and hydrated oxides, sulfur-containing silicates, metal sulfides and selenides, complex metal cyanides, metal sulfates, chromates and molybdates, azo pigments, indigoids, dioxazine, quinacridone, phthalocyanine, isoindolinone, perylene and perinone, metal complex, alkali blue and diketo pyrrolo pyrrole (DPP) pigments.

10. A method according to any one of claims 1 to 8, **characterised in that** the radiation-curable layers (15, 16, 17) are applied to the associated substrates (3, 7, 12) by screen or stencil printing.

11. A method according to any one of claims 1 to 8, **characterised in that** the radiation-curable layers (15, 16, 17) are applied to the associated substrates (3, 7, 12) by casting or by means of pressure rollers.

12. A method according to claim 2, **characterised in that** a strip-form paper impregnated with phenolic resin is used as the first substrate (3) and a strip-form plastics film is used as each of the second and further substrates (7, 12).

13. A method according to claim 12, **characterised in that** the plastics film is selected from the group comprising polyolefins, such as polyethylene, polypropylene, polyester, or polyamides.

14. A method according to claim 2, **characterised in that** the second substrate (7) is detached from the multilayer composite (9) prior to the second method step.

15. A method according to claim 2, **characterised in that** a third layer (18) provided with coloured pigments and curable using actinic radiation is applied to the multilayer composite (9) in the second method step.

16. A coloured multilayer composite, which may be produced using the method according to claims 1 to 15, **characterised in that** it consists of a substrate (3) with a smooth, even surface, which comprises a plastics film or a paper strip impregnated with phenolic resin, of two or three acrylic-based, laminated-together, radiation-cured layers (15, 16, 18), which contain different coloured pigments, of a clear, acrylic-based outer layer (17) and of a peelable plastics film (12) as protective layer.

17. A coloured multilayer composite, which may be produced using the method according to one or more of claims 1 to 15, **characterised in that** it consists of a substrate (33) with a very uneven surface, a priming and/or coupling layer (34), a melallic coating (23), a clear coat (26) and a peelable substrate (25) of plastics film, and **in that** the layers (34, 23, 26) are laminated together and cured by radiation.

18. A coloured multilayer composite according to claim 16 or claim 17, which is connected as a decorative coating to sheets or panels consisting of paper plies impregnated with phenolic and/or melamine resins, of boxboard, wood, plastics or resin-impregnated wood chips press-moulded together to form weather-resistant sheets or panels which exhibit decorative properties with long-term weather-resistance.

## Revendications

1. Procédé en vue de la fabrication d'un composite multicouches coloré, lors duquel deux ou plusieurs couches, capables de durcissement sous irradiation, dont une couche est une couche de finition transparente et dont les autres couches sont pourvues de pigments colorés, sont laminées les unes aux autres et soumises à durcissement, **caractérisé en ce que**
- dans une première étape de procédé, les couches capables de durcissement sous irradiation (15, 16; 23, 26; 34), appliquées sur des couches de support (3, 7; 24, 25; 33) sont durcies en partie et **en ce que**,
- dans une deuxième étape de procédé, les couches capables de durcissement sous irradiation (15, 16; 23, 26; 34) sont complètement durcies.

2. Procédé selon la revendication 1, **caractérisé en ce que**
- dans la première étape de procédé, on applique, sur une première couche de support (3), la première couche (15) capable de durcissement sous irradiation, pourvue de pigments colorés, **en ce que** l'on applique, sur une deuxième couche de support (7), la deuxième couche (16) capable de durcissement sous irradiation, pourvue de pigments colorés, les pigments colorés de la première et de la deuxième couches (15, 16) étant différents, **en ce que** l'on lamine les deux couches de support (3, 7) avec les couches capables de durcissement sous irradiation (15, 16) tournées l'une vers l'autre, pour former un composite multicouches (9) et **en ce que** l'on durcit partiellement les couches (15, 16), capables de durcissement sous irradiation, et **en ce que**
- dans la deuxième étape de procédé, l'on lamine le composite multicouches (9) à une feuille en matière synthétique (12), sur laquelle est appliquée une couche de finition transparente (17), capable de durcissement sous irradiation qui est tournée vers le composite multicouches (9) et **en ce que** l'on durcit complètement les couches adjacentes les unes aux autres (15, 16, 17).

3. Procédé selon les revendications 1 et 2, **caractérisé en ce que** le durcissement partiel et le durcissement complet des couches (15, 16, 17, 23, 26, 34) sont effectués à l'aide d'un rayonnement actinique.

4. Procédé selon la revendication 3, **caractérisé en ce que** l'on utilise, en tant que rayonnement actinique, des électrons accélérés, un rayonnement UV dans le domaine de longueurs d'onde allant de 50 à 480 nm ou un rayonnement X dans le domaine de longueurs d'onde de 0,05 à 8,0 nm.

5. Procédé selon les revendications 1 et 3, **caractérisé en ce que** l'on utilise des couches capables de durcissement sous irradiation (15, 16, 17, 23, 26, 34) à base d'acrylates et/ou de méthacrylates (C1 à C6)-alkyles, en particulier à base d'acrylates et/ou de méthacrylates de méthyle ou d'éthyle.

6. Procédé selon les revendications 1 à 5, **caractérisé en ce que** la dose de rayonnement actinique dans les étapes de procédé est réglée de telle sorte que l'on applique seulement lors de la dernière procédure d'irradiation la quantité de rayonnement nécessaire au durcissement complet des couches capables de durcissement sous irradiation.

7. Procédé selon la revendication 6, **caractérisé en ce que** les couches capables de durcissement sous irradiation (15, 16, 17, 23, 26, 34) sont exposées dans la première étape de procédé au plus à 30 % de la dose maximale nécessaire du rayonnement actinique pour le durcissement complet.

8. Procédé selon la revendication 7, **caractérisé en ce que** les couches (15, 16, 17, 23, 26, 34) partiellement durcies sont exposées dans la deuxième étape de procédé à une dose de 30 % à 100 % du rayonnement actinique pour le durcissement complet.

9. Procédé selon la revendication 1, **caractérisé en ce que** les pigments colorés des couches (15, 16, 23, 34) sont sélectionnés parmi le groupe des oxydes, des hydroxydes et des oxydes hydratés métalliques, des silicates contenant du soufre, des sulfures et des séléniures métalliques, des cyanures métalliques complexes, des sulfates, des chromates et des molybdates métalliques, des pigments azoïques, des pigments indigoïdes, des pigments de dioxazine, de quinacridone, de phtalocyanine, d'isoindolinone, de pérylène et de périnone, de pigments complexes métalliques, de pigments de bleu alcalin et de dicétopyrrolopyrrole (DPP).

10. Procédé selon l'une quelconque des revendications 1 à 8, **caractérisé en ce que** les couches capables de durcissement sous irradiation (15, 16, 17) sont appliquées sur les couches de support correspondantes (3, 7, 12) par sérigraphie ou par impression stencil.

11. Procédé selon l'une quelconque des revendications 1 à 8, **caractérisé en ce que** les couches capables de durcissement sous irradiation (15, 16, 17) sont appliquées sur les couches de support correspondantes (3, 7, 12) par coulée ou par laminage au rouleau d'imprimerie.

12. Procédé selon la revendication 2, **caractérisé en ce que** l'on utilise, en tant que première couche de support (3), un papier sous forme de bande, imprégné de résine phénolique, en tant que deuxième couche de support (7) et en tant que couche de support supplémentaire (12), à chaque fois une feuille en matière synthétique sous forme de bande.

13. Procédé selon la revendication 12, **caractérisé en ce que** la feuille en matière synthétique est sélectionnée parmi le groupe des polyoléfines comme le polyéthylène, le polypropylène, les polyesters ou les polyamides.

14. Procédé selon la revendication 2, **caractérisé en ce que** l'on sépare, avant la deuxième étape de procédé, la deuxième couche de support (7) du composite multicouches (9).

15. Procédé selon la revendication 2, **caractérisé en ce que** l'on applique, dans la deuxième étape de procédé, sur le composite multicouches (9), une troisième couche (18), pourvue de pigments colorés, capable de durcissement à l'aide d'un rayonnement actinique.

16. Composite multicouches coloré, qui peut être fabriqué conformément au procédé selon les revendications 1 à 15, **caractérisé en ce qu'**il se compose, en tant que couche de protection, d'une couche de support (3) à surface lisse régulière, qui est une feuille en matière synthétique ou une bande de papier imprégnée de résine phénolique, de deux ou trois couches à base acrylique (15, 16, 18), durcies à l'aide d'un rayonnement, laminées les unes aux autres, qui contiennent des pigments colorés différents, d'une couche de finition transparente (17) à base acrylique ainsi que d'une feuille en matière synthétique amovible (12).

17. Composite multicouches coloré, qui peut être fabriqué conformément au procédé selon l'une quelconque des revendications 1 à 15, **caractérisé en ce qu'**il se compose d'une couche de support (33) à surface fortement irrégulière, d'une couche d'apprêt et/ou d'une couche de promotion de l'adhésion (34), d'un revêtement métallique (23), d'une couche transparente (26) et d'une couche de support amovible (25), faite d'une feuille en matière synthétique et **en ce que** les couches (34, 23, 26) sont laminées les unes aux autres et sont durcies à l'aide d'un rayonnement.

18. Composite multicouches coloré selon la revendication 16 ou 17, qui est lié, en tant que revêtement décoratif, à des plaques ou à des panneaux faits à partir de couches de papier imprégnées de résines phénoliques et/ou de résines de mélamine, de cartonnages, de bois, de matière synthétique, de copeaux de bois comprimés ensemble, imprégnés de résines, pour former des plaques ou des panneaux, à résistance aux intempéries, qui présentent des propriétés décoratives résistantes à long terme vis-à-vis de l'influence des intempéries.
